Europäisches Patentamt

European Patent Office

Office européen des brevets

(19)

(11) **EP 1 217 563 A2**

(12) **EUROPEAN PATENT APPLICATION**

(43) Date of publication:
**26.06.2002 Bulletin 2002/26**

(51) Int Cl.$^7$: **G06F 17/60**

(21) Application number: **01307349.9**

(22) Date of filing: **30.08.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **31.08.2000 JP 2000263794
02.10.2000 JP 2000301655**

(71) Applicant: **TOYOTA JIDOSHA KABUSHIKI
KAISHA**
**Toyota-shi, Aichi 471-8571 (JP)**

(72) Inventors:
• **Suzuki, Hirosumi**
**Toyota-shi, Aichi-ken, 471-8571 (JP)**

• **Kaneko, Kuniya**
**Toyota-shi, Aichi-ken, 471-8571 (JP)**
• **Nakamura, Toshihiko**
**Toyota-shi, Aichi-ken, 471-8571 (JP)**
• **Kojima, Hidetsugu**
**Toyota-shi, Aichi-ken, 471-8571 (JP)**
• **Otokubo, Kentaro**
**Toyota-shi, Aichi-ken, 471-8571 (JP)**
• **Kondo, Motohisa**
**Toyota-shi, Aichi-ken, 471-8571 (JP)**

(74) Representative: **Rees, Alexander Ellison et al
Urquhart-Dykes & Lord,
30 Welbeck Street
London W1G 8ER (GB)**

(54) **Supply plan drafting device, method of drafting supply plan, program for drafting supply plan, and method of drafting production plan**

(57)    A planned production volume in each of production lines, the work force required for production of the planned production volume in the production lines, a tact time, an overtime, a holiday service duty, a work force and so on are initially set based on a required production volume of an article i. The work force, the summated work forces and the planned production volume are successively changed at a predetermined interval to calculate an evaluating value as a cost required for production of the article i of the planned production volume. A set value corresponding to a minimum evaluating value is outputted as an article supply plan value. These processings make it possible to quickly draft a production plan for producing the article at low costs.

FIG. 3

```
        ARTICLE SUPPLY PLAN DRAFTING
              PROCESS ROUTINE

    INPUT REQUIRED PRODUCTION VOLUME XI(T)      S100

        INITIALLY SET PLANNED                   S102
    PRODUCTION VOLUME VALUE YIJ(T)

        SET SUMMATED WORK FORCE ZJ3K(T)         S104

        SET OVERTIME ZJ1(T) AND                 S106
      HOLIDAY SERVICE DUTY ZJ2(T)

        SET WORK FORCE ZJ3K(T)                  S108

    CALCULATE AND STORE EVALUATING VALUE        S110

    CHANGE WORK FORCE ZJ3K(T) AT INTERVAL Z3    S112

    NO          CHANGE              S114
              COMPLETED?
                  YES

    CHANGE SUMMATED WORK FORCE ZJ3K(T)          S116

    NO          CHANGE              S118
              COMPLETED?
                  YES

        CHANGE PLANNED PRODUCTION               S120
    VOLUME VALUE YIJ(T) AT INTERVAL ZY

    NO          CHANGE              S122
              COMPLETED?
                  YES

    SET A VALUE CORRESPONDING TO A MINIMUM      S124
    EVALUATING VALUE AS AN ARTICLE SUPPLY PLAN VALUE

    OUTPUT THE ARTICLE SUPPLY PLAN VALUE        S126

                  RET
```

**EP 1 217 563 A2**

## Description

The invention relates to a supply plan drafting device, a supply plan drafting method, a program for drafting a supply plan, and a production plan drafting method and, more particularly, to a supply plan drafting device for drafting a supply plan of an article or service in a plurality of supply stations capable of supplying the article or service, a method of drafting the supply plan, a program for drafting such a supply plan, and a production plan drafting method capable of reducing a personnel cost required in a plurality of production lines.

As a supply plan drafting device of this kind, a device that accounts for various detailed costs concerning production of an article has been proposed (see, e.g., Japanese Patent Application Laid-Open No. 11-353375). In this device, man-hours, work force, cost and so on required for production of the article are calculated based on various departmentalized data such as line data, parts data, man-hour data and standard cost data, and are then output.

However, such a supply plan drafting device has difficulty in drafting an article production plan with a minimized cost. Merely calculating man-hour, work force, cost and so on based on various departmentalized data does not make it possible to find out how to distribute a required production volume of the article to production lines, how much operating time is to be allocated to each of the production lines, and how much work force of each work force type is to be engaged in each of the production lines, in order to lower the cost for production of the article. One could manually input a plurality of conditions, obtain a plurality of calculation results, output a plurality of costs for production of the article, and select one of the conditions corresponding to a minimum one of the costs. However, this method would be time-consuming, require prodigious labor, and would not always guarantee to provide a condition corresponding to a minimum cost for production of the article.

On the other hand, with respect to a production plan drafting method, carmakers and so on produce a vast variety of vehicles and the like in production lines. In general, a whole production process in each of the production lines is divided into a plurality of processes to be assigned to workers, and each of the workers is engaged in a predetermined operation within a tact time that is obtained by dividing the operating time into time sections of a predetermined length. Vehicles are produced in carmakers based on a production plan that has been drafted in advance. The production plan is drafted such that the production cost is lowered, and so that the production efficiency is improved.

For example, Japanese Patent Application Laid-Open No. 2000-76345 discloses a productivity/cost review supporting device for supporting review of productivity and cost in a fact-finding manner, from designing in design departments to production in production plants, without resorting to empirical generalization. In this technique, productivity and cost are calculated from personnel costs, manufacturing costs and so on, from designing to production.

However, this technique does not take into account the tact time as an operating condition of the production lines when calculating a personnel cost required for achievement of a preset planned production volume, and thus does not always guarantee the provision of a minimum personnel cost. In other words, a planned production volume per operating day is usually set by allocating a planned production volume set for a certain month as a plan-executing period to each of the production lines and each of the operating days, and the operating time is determined in such a manner as to guarantee a planned production volume set for each of the production lines. This process does not take adjustment of the tact time into account. Namely, this process uniquely sets a variable tact time and thus does not guarantee an optimized operating time for each of the operating days. If the operating time has not been optimized, it is doubtful whether working hours of the workers have been optimized. Therefore, it is impossible to conclude that the calculated personnel cost represents the minimum cost.

It is an object of the invention to provide a device, a method and a program for drafting a plan for supplying an article or service or performing production in a production plant at a reduced cost.

According to a first aspect of the invention, there is provided a supply plan drafting device for drafting a supply plan of an article or a service in a plurality of supply stations capable of supplying the article or the service, characterized by comprising:

data storing means for storing unit supply man-hour data on work force and time required to supply the article or the service per unit and unit work-force-type-based cost data on cost per unit according to work force types;
required supply volume inputting means for inputting an entire required supply volume of the article or the service;
supply volume distributing means for distributing the input required supply volume to station supply volumes to be supplied from the supply stations based on a distribution parameter;
work force setting means for calculating a station supply man-hour required to supply the article or the service of the distributed station supply volume based on the unit supply man-hour data stored in the data storing means and setting a work-force-type-based work force for the calculated station supply man-hour based on a work force parameter;
cost calculating means for calculating a gross cost to supply the station supply volume from the supply stations based on the work-force-type-based work force set by the work force setting means and the unit work-force-type-based cost data stored in the data storing means;

parameter changing means for successively changing the distribution parameter and the work force parameter; and plan setting means for selecting a revised distribution parameter and a revised work force parameter corresponding to a minimum gross cost calculated by the cost calculating means using the work-force-type-based work force that is set by the work force setting means in response to changes in the distribution parameter and in the work force parameter by the parameter changing means and setting, as a supply plan, station supply volumes that are distributed by the supply volume distributing means using the revised distribution parameter and the revised work-force-type-based work forces for the supply stations.

In this supply plan drafting device, the distribution parameter that is used when the supply volume distributing means distributes the required supply volume to the station supply volumes to be supplied from the supply stations, and the work force parameter that is used when the work force setting means sets the work-force-type-based work force for the station supply man-hour corresponding to the station supply volumes are changed successively, and a (revised) distribution parameter and a (revised) work force parameter corresponding to a minimum calculated gross cost are selected. As a supply plan, the distributed station supply volumes are set using the revised distribution parameter, and the work-force-type-based work force to be set for each of the supply stations are set using the revised work force parameter. As a result, it is possible to draft a plan for supplying an article or service of the required supply volume in such a manner as to reduce the gross cost.

In the first aspect of the invention, the parameter changing means may change the distribution parameter within a suppliable range of the supply stations. In this manner, it is possible to draft a supply plan within a suppliable range of the supply stations.

In the first aspect of the invention, the suppliable range may include a regular suppliable range based on regular operation, and an irregular suppliable range based on irregular operation. In addition, the unit work-force-type-based cost data may include regular-operation unit work-force-type-based cost data on cost per unit according to work force types for regular operation, and irregular-operation unit work-force-type-based cost data on cost per unit according to work force types for irregular operation. In this manner, it is possible to draft a supply plan corresponding to a further reduced gross cost by taking regular operation and irregular operation into account.

Furthermore, in the first aspect of the invention, the irregular suppliable range may include an overtime suppliable range based on overtime service, and a holiday service suppliable range based on holiday service. In addition, the irregular operation unit work-force-type-based cost data may include overtime unit work-force-type-based cost data on cost per unit according to work force types for overtime service, and holiday service unit work-force-type-based cost data on cost per unit according to work force types for holiday service. In this manner, it is possible to classify the irregular operation into overtime service and holiday service.

In the first aspect of the invention, the parameter changing means may change ratios of the work force types as a factor of the work force parameter. In this manner, it is possible to draft a supply plan corresponding to a further reduced gross cost by taking the ratios of the work force types into account.

In the first aspect of the invention, the work force types may include regular employees and a plurality of types of temporary employees, and the parameter changing means may change ratios of the work force types by changing percentages of the plurality of types of temporary employees. In this manner, it is possible to handle the cost for regular employees as a fixed cost and reflect the influence of the cost for irregular employees upon fluctuations of the gross cost.

In the first aspect of the invention, the parameter changing means may change the work force in each of the supply stations as a factor of the work force parameter. In this manner, it is possible to reflect an increase or decrease in overtime service or holiday service upon fluctuations of the gross cost.

In the first aspect of the invention, the parameter changing means may change a gross work force in the supply stations within a work force changeable range of the supply stations.

In the first aspect of the invention, the parameter changing means may successively change each of the parameters at a predetermined interval set for the parameter. In this manner, it is possible to draft a plan more quickly than in the case where the parameters are successively changed as to all the variables.

In the first aspect of the invention, the supply stations may be production lines for producing the article, and the unit supply man-hour data may be data on work force and time required for production of a single unit of the article. In this manner, it is possible to draft a supply plan corresponding to a minimum gross cost as an article production plan corresponding to a minimum gross production cost.

In the first aspect of the invention, the supply stations may be stations for offering a predetermined service, and the unit supply man-hour data may be data on work force and time required for offer of a single unit of the predetermined service. In this manner, it is possible to draft a supply plan corresponding to a minimum gross cost as a service offering plan corresponding to a minimum gross cost of offering the predetermined service.

According to a second aspect of the invention, there is provided a supply plan drafting program having computer-readable instructions that make a computer function as the supply plan drafting device having any one of the above constructions.

This program can make a computer function as the supply plan drafting device having any one of the above constructions.

According to a third aspect of the invention, there is provided a computer-implemented supply plan drafting method of drafting a supply plan of an article or a service in a plurality of supply stations capable of supplying the article or the service, characterized by comprising the steps of:

(a) distributing a required supply volume of the article or the service to station supply volumes to be supplied from the supply stations while successively changing a distribution parameter;

(b) calculating a station supply man-hour required to supply the article or the service of the distributed station supply volumes based on unit supply man-hour data on work force and time required to supply the article or the service per unit and setting a work-force-type-based work force for the calculated station supply man-hour while successively changing a work force parameter;

(c) calculating a gross cost to supply the station supply volumes to be supplied from the supply stations based on the set work-force-type-based work force and unit work-force-type-based cost data on work-force-type-based cost per unit; and

(d) selecting a revised distribution parameter and a revised work force parameter corresponding to a minimum of the gross cost calculated in response to changes in the distribution parameter and the work force parameter and setting as a supply plan station supply volumes that are distributed using the revised distribution parameter and the revised work-force-type-based work forces for the supply stations.

According to this supply plan drafting method, the distribution parameter and the work force parameter are changed successively to select a distribution parameter and a work force parameter corresponding to a minimum calculated gross cost, and the distributed station supply volumes and the work-force-type-based work force to be set for each of the supply stations are set as a supply plan using the selected distribution parameter and the selected work force parameter respectively. Thus, it is possible to draft a supply plan corresponding to a minimum gross cost required for supply of the article or service.

In the third aspect of the invention, the step (a) may change the distribution parameter within a suppliable range of the supply stations. In this manner, it is possible to draft a supply plan within a suppliable range of each of the supply stations.

In the third aspect of the invention, the suppliable range may include a regular suppliable range based on regular operation, and an irregular suppliable range based on irregular operation. In addition, the unit work-force-type-based cost data may include regular-operation unit work-force-type-based cost data on cost per unit according to work force types for regular operation, and irregular-operation unit work-force-type-based cost data on cost per unit according to work force types for irregular operation. In this manner, it is possible to draft a supply plan corresponding to a further reduced gross cost by taking regular operation and irregular operation into account.

Furthermore, in the third aspect of the invention, the irregular suppliable range may include an overtime suppliable range based on overtime service, and a holiday service suppliable range based on holiday service. In addition, the irregular operation unit work-force-type-based cost data may include overtime unit work-force-type-based cost data on cost per unit according to work force types for overtime service and holiday service unit work-force-type-based cost data on cost per unit according to work force types for holiday service. In this manner, it is possible to classify the irregular operation into overtime service and holiday service.

In the third aspect of the invention, the step (a) may successively change the distribution parameter at a predetermined interval. In this manner, it is possible to draft a supply plan quickly.

In the third aspect of the invention, the step (b) may change ratios of the work force types as a factor of the work force parameter. In this manner, it is possible to draft a supply plan corresponding to a further reduced gross cost by taking the ratios of the work force types into account. In the third aspect of the invention, the work force types may include regular employees and a plurality of types of temporary employees, and the step (b) may change ratios of the work force types by changing percentages of the plurality of types of temporary employees. In this manner, it is possible to handle the cost for regular employees as a fixed cost and reflect the influence of the cost for irregular employees upon fluctuations of the gross cost.

In the third aspect of the invention, the step (b) may change the work force in each of the supply stations as a factor of the work force parameter. In this manner, it is possible to reflect an increase or decrease in overtime service or holiday service upon fluctuations of the gross cost. In the third aspect of the invention, the step (b) may change a gross work force in the supply stations within a work force changeable range of the supply stations.

In the third aspect of the invention, the step (b) may successively change the work force parameter at a predetermined interval. In this manner, it is possible to draft a supply plan more quickly.

According to a fourth aspect of the invention, there is provided a computer-implemented production plan drafting method of drafting a production plan for producing an article in a plurality of production lines every plan-executing period including a plurality of operating days, characterized by comprising:

a production-line-based planned production volume provisionally determining step of allocating a planned production volume during the plan-executing period to the production lines;

an operating-time setting step of calculating an operating time in each of the production lines during the plan-executing period corresponding to a provisionally determined tact time in each of the production lines and the production-line-based planned production volume, based on a relation among tact time, planned production volume and operating time in each of the production lines;

a number-of-workers calculating step of calculating the number of workers required in each of the production lines based on the set operating time;

a production-line-based personnel cost calculating step of calculating a personnel cost in each of the production lines after distribution of the calculated number of workers to worker categories with different hourly wages; and

a gross personnel cost calculating step of calculating a gross personnel cost in all the production lines by summing personnel costs in the respective production lines, wherein

a minimum gross personnel cost is calculated while adjusting the number of workers distributed to the worker categories, the tact time, and the planned production volume allocated to each of the production lines.

In the fourth aspect of the invention, a gross personnel cost in all the production lines may be calculated using a Petri net model.

In the fourth aspect of the invention, a gross personnel cost is calculated on various conditions while adjusting the number of workers distributed to each of the worker categories, the tact time, and the planned production volume to be distributed to each of the production lines. Then a minimum gross personnel cost can be finally calculated. Furthermore, it is possible to determine the personnel cost, the operating time, the tact time, the number of workers, and the number of workers distributed to each of the worker categories in each of the production lines when the gross personnel cost is at its minimum.

The invention will be described in conjunction with the following drawings in which like reference numerals designate like elements and wherein:

Fig. 1 is a block diagram showing functional blocks according to a first embodiment of the invention;

Fig. 2 is a block diagram showing a hardware construction of an article supply plan drafting device according to the first embodiment of the invention;

Fig. 3 is a flowchart showing as an example an article supply plan drafting process routine executed by the article supply plan drafting device according to the first embodiment of the invention;

Fig. 4 is a conceptual view showing a supply plan concept when a plurality of articles i are produced in a plurality of production lines j and supplied;

Fig. 5 is a block diagram showing a production plan drafting device carrying out a production plan drafting method according to a second embodiment of the invention;

Fig. 6 is a flowchart showing a minimum gross personnel cost calculating routine according to the second embodiment of the invention;

Fig. 7 is a graph showing a relation among tact time, expected volume of production and operating time in each production line according to the second embodiment of the invention;

Fig. 8 is a conceptual view showing a relation between each production line and expected month of production in an entire production plant according to the second embodiment of the invention; and

Fig. 9 shows a Petri net model for seeking a minimum gross personnel cost according to the second embodiment of the invention.

Next, embodiments of the invention will be described.

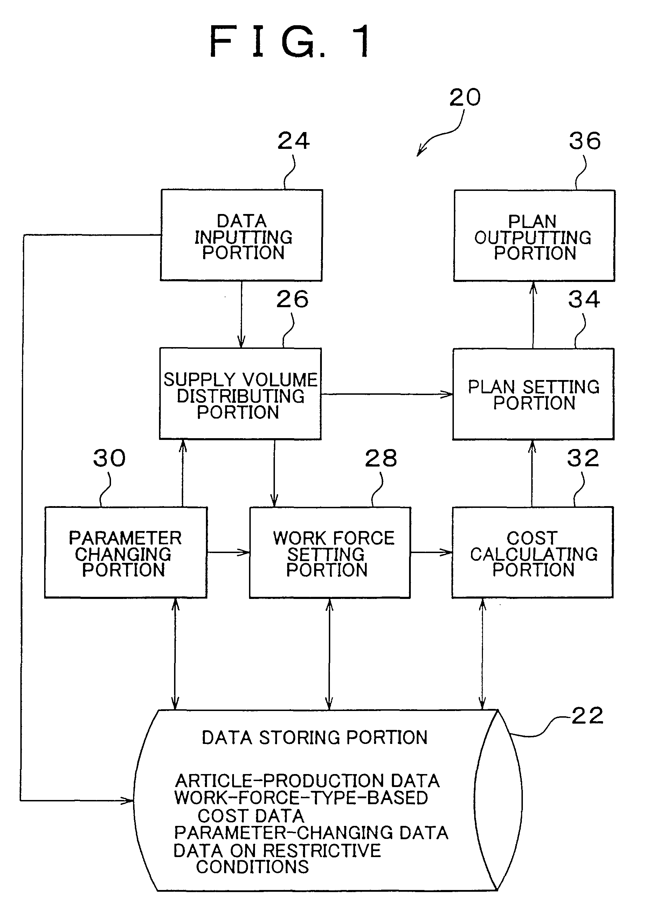

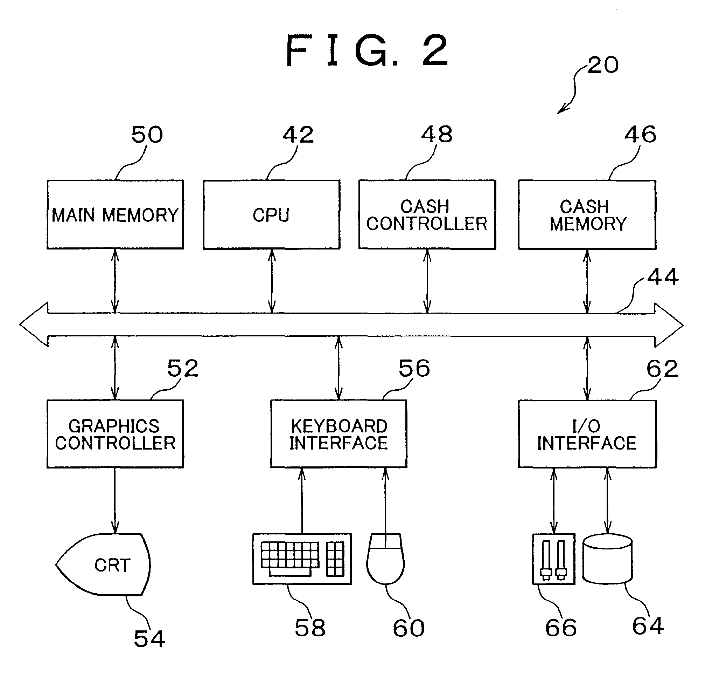

Fig. 1 is a block diagram showing an overall construction of the article supply plan drafting device 20 according to the first embodiment of the invention as functional blocks. Fig. 2 is a block diagram showing a hardware construction of the article supply plan drafting device 20 according to the first embodiment of the invention.

As shown in Fig. 2, the article supply plan drafting device 20 of the first embodiment is hardware-wise constructed of a general-purpose computer mainly composed of a CPU 42 as a central processor. A cash memory 46, a cash controller 48, a main memory 50, a graphics controller 52 to which a CRT 54 is connected, a keyboard interface 56 to which a keyboard 58 and a mouse 60 are connected, an I/O interface 62 to which a hard disk system 64, a floppy disk system 66 and so on are connected, and so on are connected to a bus 44 connected to the CPU 42.

As shown in Fig. 1, the article supply plan drafting device 20 of the first embodiment has, as functional blocks, a data storing portion 22 for storing various data and restrictive conditions. It also has a data inputting portion 24 for inputting various data and a required supply volume and so on. It also has a supply volume distributing portion 26 for distributing the required supply volume to supply stations based on a distribution parameter. It further has a work force setting portion 28 for setting a work force required for supplying a station supply volume that has been distributed to each of the supply stations using a work force parameter. It also has a parameter changing portion 30 for successively changing the distribution parameter used in the supply volume distributing portion 26 and the work force parameter used in the work force setting portion 28. It also has a cost calculating portion 32 for calculating a gross cost required for supplying the required supply volume from each of the stations based on the work force set in the work force setting portion 28. It further has a plan setting portion 34 for setting article supply plan values by selecting distribution of the supply volumes and the setting of the work force in such a manner as to minimize the gross cost. It also has a plan outputting portion 36 for outputting an article supply plan that has been set. The functional blocks of the article supply plan drafting device 20 of the first embodiment are realized when the hardware construction exemplified in Fig. 2 is integrated with later-described software.

Article production data on a production line j of an article i such as a unit supply man-hour $Sij$ [personnel·×time/ article] expressed as a product of work force and time required for producing a single article i in a production line j, an operating duty $Aj(t)$ [duty/month] in a production line j in t month, and a regular operating time $Tj$ [time/duty] per duty in a production line j, work-force-type-based cost data such as a cost $C0k$ [yen/personnel·×time] per regular operating man-hour of a work force type k such as regular employees, contract-based employees, temporary employees and part-timers, a cost $C1k$ [yen/personnel·×time] per overtime man-hour of a work force type k, and a cost $C2k$ [yen/ personnel·×time] per holiday service man-hour of a work force type k, data on changes in distribution parameter such as a changeable range $Ly$ of a planned production volume value $Yij(t)$ [volume/month] for production of an article i in a production line j in t month and an interval $zy$ [volume/time] in changing the planned production volume value $Yij(t)$, data on overtime and holiday service such as a changeable range $L1$ of an overtime $Zj1(t)$ [time/duty] per duty of a production line j in t month, an interval $z1$ [time/duty] in changing the overtime $Zj1(t)$, a changeable range $L2$ of a holiday service duty $Zj2(t)$ [duty/month] as a holiday service duty per duty of a production line j in t month, and an interval $z2$ [duty/month] in changing the holiday service duty $Zj2(t)$, data on changes in the work force parameter such as a changeable range $L3$ of a summated (summed) work force $Zj3k(t)$ [personnel] of a work force type k in a production line j in t month, a changeable range $Lk$ of the summated work force $Zj3k(t)$, and an interval $z3$ [personnel] in changing the summated work force $Zj3k(t)$, data on other restrictive conditions such as a changeable range $L4$ of a tact time $Zj4(t)$ [time/volume] in a production line j in t month and an interval $z4$ [time/volume] in changing the tact time $Zj4$, and so on are stored in the data storing portion 22. These data are input by means of the data inputting portion 24 such as the keyboard 58.

The supply volume distributing portion 26 distributes a required production volume $Xi(t)$ [volume/month] as a required supply volume of an article i in a plan-executing month t input from the data inputting portion 24 to a planned production volume value $Yij(t)$ in each production line j as a supply station based on an initial value and a distribution parameter changed by the parameter changing portion 30. In the first embodiment, a planned value at the time of last planning is used as an initial value of the distribution parameter. For example, in the case of a rolling plan wherein an article supply plan was last drafted for January to March, and wherein an article supply plan is drafted for February to April this time, last-time values may be used as distribution parameters for February and March and a value of last month, i.e., March is used as a distribution parameter for April. Because the required production volume $Xi(t)$ [volume/ month] changes every month, use of the last-time values signifies the same proportional distribution as last time. Although a last-time value is used as an initial value of the distribution parameter in the first embodiment, a predetermined initial value may also be used.

The work force setting portion 28 calculates a unit supply man-hour $Sij$ [personnel·×time/volume] of each production line j based on the planned production volume value $Yij(t)$ distributed by the supply volume distributing portion 26, and sets an overtime $Zj1(t)$ and a holiday service duty $Zi2(t)$ per duty in a production line j in t month, a work force $Zj3k(t)$ and a tact time $Zj4(t)$ of a work force type k in a production line j in t month, and so on based on an initial value, a changed work force parameter and various restrictive conditions. A setting method will be described later.

The cost calculating portion 32 calculates a cost using evaluating equations, i.e., an equation (1) as a general equation and an equation (2) as a concrete example and based on the required production volume $Xi(t)$ distributed to each production line j by the supply volume distributing portion 26, the overtime $Zj\,1(t)$ and the holiday service duty $Zj2(t)$ in a production line j in t month set by the work force setting portion 28, the work force $Zj3k(t)$ and the tact time $Zj4(t)$ of a work force type k in a production line j in t month, and work-force-type-based cost data such as a cost $C0k$ per regular operating man-hour of a work force type k, a cost $C1k$ per overtime man-hour of a work force type k, a cost $C2k$ per holiday service man-hour of a work force type k, and so on stored in the data storing portion 22. The equation (2) uses k' instead of a work force type k. The symbol k' means using k only when a cost for regular operation is cast as a fluctuant cost. That is, since a salary for regular operation is paid to a regular employee irrespective of whether or not regular operation has actually been performed, the salary is regarded as a fixed cost and is not included in the evaluating equations. If a work force k is used instead of k', a gross cost inclusive of a fixed cost is calculated.

$$Hj\,(t) = f(Zj\,1(t),\, Zj\,2(t),\, Zj\,3k(t),\, Zj\,4(t).....) \tag{1}$$

$$Hj\,(t) = Aj\,(t) \bullet Tj \bullet \sum_{k'} (c0k' \bullet Zj\,3k'(t)$$

$$+ \; Aj\,(t) \bullet Zj\,1(t) \bullet \sum_{k} (c1k\,/\,Zj\,3k\,(t))$$

$$+ \; Tj \bullet Zj\,2\,(t) \bullet \sum_{k} (c2k \bullet Zj\,3k\,(t)) \quad ...(2)$$

The plan setting portion 34 sets, as planned article supply values, the required production volume $Xi(t)$ distributed to a production line j calculated using a distribution parameter and a work force parameter that are minimum evaluating values that have been calculated by the cost calculating portion 32 using the evaluating equations in changing the distribution parameter and the work force parameter at the interval, the overtime $Zj1(t)$ and the holiday service duty $Zj2(t)$ per duty of a production line j in t month set by the work force setting portion 28, and the work force $Zj3k(t)$ and the tact time $Zj4(t)$ of a work force type k in a production line j in t month. The plan outputting portion 36 outputs the planned article supply values set by the plan setting portion 34 to the CRT 54 and so on.

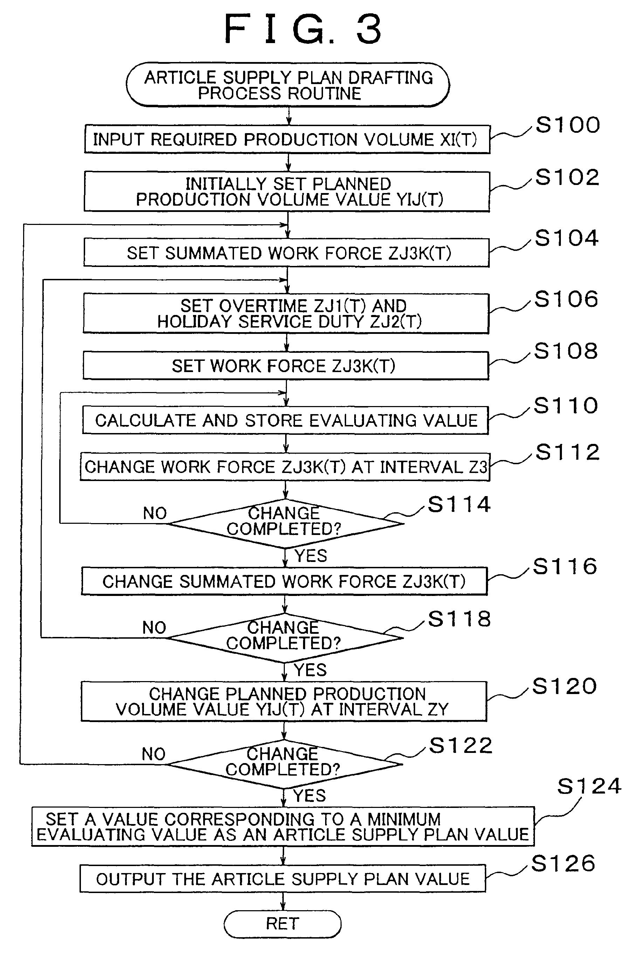

Next, operation of the thus-constructed article supply plan drafting device 20 of the first embodiment will be described based on an article supply plan drafting process routine shown in Fig. 3. Upon execution of this routine, the CPU 42 of the article supply plan drafting device 20 of the first embodiment first of all inputs a required production volume $Xi(t)$ (step S100), and initially distributes the input required production volume $Xi(t)$ to a planned production volume value $Yij(t)$ in each production line j as a production station based on a distribution parameter set as an initial value (step S102). Initial distribution of the required production volume $Xi(t)$ to the planned production volume value $Yij(t)$ has been described above. Needless to say, distribution of the required production volume $Xi(t)$ to the planned production volume value $Yij(t)$ is carried out such that a summated (summed) planned production volume value $Yij(t)$ of the production lines j becomes equal to the required production volume $Xi(t)$.

Subsequently, a summated work force $Zj3k(t)$ of a work force type k in a production line j in t month is set. The summated work force $Zj3k(t)$ is set using a changeable range L3 of the summated work force $Zj3k(t)$ as described above and an equation (3). The equation (3) is derived from an equation (4) and an equation (5). The equation (4) is derived from the fact that the sum of a volume calculated for each article produced in each production line j multiplied by a reference time is equal to a work force engaged in the production line j in a corresponding month multiplied by a gross operating time and that the gross operating time is equal to the sum of a regular operating time, an overtime and a holiday service time. The equation (5) is derived from the fact that a gross volume of articles produced in a production line j is equal to a value obtained by dividing a gross operating time of the production line by a time required for production of the articles, i.e., a tact time.

$$\sum_{i} (Yij\,(t),\, Sij) = Zj\,4(t) \bullet \sum_{i} Yij\,(t) \bullet \sum_{k} Zj\,3k\,(t) \quad ...(3)$$

$$\sum_{i} (Yij\,(t),\, Sij) = \sum_{k} Zj\,3k\,(t) \bullet \{Aj\,(t) \bullet (Tj + Zj\,1(t)) + Tj \bullet Zj\,2(t)\} \quad ...(4)$$

$$\sum_{i} Yij\,(t) = \frac{1}{Zj\,4(t)}\{Aj\,(t) \bullet (Tj + Zj\,1(t)) + Tj \bullet Zj\,2(t)\} \quad ...(5)$$

Referring to the equation (3), since the planned production volume value $Yij(t)$ has been set in step S102, a variable that has not been set is the sum of the work force $Zj3k(t)$ and the tact time $Zj4(t)$. Here, the tact time $Zj4(t)$ is initially set using a last-month value, i.e., a tact time $Zj4(t—-1)$. Thus, the summated work force $Zj3k(t)$ is the only unknown quantity in the equation (3) and therefore, the summated work force $Zj3k(t)$ can be set. A processing in step S104 is performed based on such a method of setting the summated work force $Zj3k(t)$.

Next, an overtime $Zj1(t)$ and a holiday service duty $Zj2(t)$ are set (step S106). The planned production volume value Yij(t) and the tact time Zj4(t) have been set in the above equation (5). Thus, if one of an overtime Zj1(t) and a holiday service duty Zj2(t) has been set, the other is set according to the equation (5). The overtime Zj1(t) and the holiday service duty Zj2(t) may be set within the changeable ranges L1, L2 respectively. However, there is usually established a relation: cost for holiday service >> cost for overtime service. Therefore, according to the first embodiment, an overtime Zj1(t) is set as a maximum value in the changeable range L1, and the remnant is set as a holiday service duty Zj2(t) using the equation (5). If there is established a relation: cost for holiday service << cost for overtime service, an opposite method may be adopted. Namely, a holiday service duty Zj2(t) is set as a maximum value in the changeable range L2, and the remnant is set as an overtime Zj1(t) using the equation (5). If there is established a relation: cost for holiday service = cost for overtime service, any one of the aforementioned methods may be adopted. Alternatively, an overtime Zj1(t) and a holiday service duty Zj2(t) may be handled as a single parameter.

Then a work force Zj3k(t) is set (step S108). The work force Zj3k(t) is set through appropriation until a maximum value is obtained within a changeable range Lk of each of the work force types in order of priority, i.e., in the order of a work force type wherein the cost for regular operation is handled as a fixed cost, a work force type wherein the cost C0k per regular operating man-hour is low, a work force type wherein the cost C1k per overtime man-hour is low, and a work force type wherein the cost C2k per holiday service man-hour is low, so that the summated work force Zj3k(t) becomes equal to the set value. That is, the overtime cost is appropriated after appropriation of the regular operation cost. If a shortfall nonetheless arises, it is appropriated as a holiday service cost. The cost handled as a fixed cost is not fluctuant and is thus appropriated by first priority, and the above order of priority takes into account a relation: cost for holiday service >> cost for overtime service. Accordingly, if cost for holiday service << cost for overtime service, priority is given to the work force type wherein the cost C2k per holiday service man-hour is low over the work force type wherein the cost C1k per overtime man-hour is low.

If the work force Zj3k(t) has thus been set, an evaluating value is calculated using the above equation (2), and the respective set values and the evaluating value are stored in a storage unit such as the hard disk system 64 (step S110).

A processing of changing the work force Zj3k(t) at the interval z3 (step S112) and a processing of calculating an evaluating value using the changed work force Zj3k(t) based on the equation (2) and storing the respective set values and the evaluating value (step S110) are repeated until change in the work force Zj3k(t) at the interval z3 is completed (step S114). By these processings, the respective set values and the evaluating value are stored in the hard disk system 64 at the interval z3 of the work force Zj3k(t).

Upon completion of the repetitive processings resulting from a change in the work force Zj3k(t), the summated work force Zj3k(t) is changed by changing the tact time Zj4(t) at the interval z4 (step S116), and the processings in step S106 to step S118 are repeated until change in the summated work force Zj3k(t) is completed. In the processing in step S104, the tact time Zj4(t) is set as a last-time value, i.e., the tact time Zj4(t—-1), whereby the summated work force Zj3k(t) is set using the equation (3). Thus, in the processing in step S116, the tact time Zj4(t) is changed at the interval z4 within the changeable range L4, whereby the summated work force Zj3k(t) is changed. Because the repetitive processings (step S110 to step S114) resulting from a change in the work force Zj3k(t) at the interval z3 are included in the processings in step S106 to step S118, the processing of changing the work force Zj3k(t) at the interval z3 and calculating an evaluating value every time the summated work force Zj3k(t) is changed and storing the calculated evaluating value and the respective set values is performed repeatedly.

Upon completion of the repetitive processings resulting from a change in the summated work force Zj3k(t), the planned production volume value Yij(t) is changed at the interval zy (step S120), and the processings in step S104 to step S122 are repeated until change in the planned production volume value Yij(t) is completed. The planned production volume value Yij(t) is changed at the interval zy within such a range that satisfies the condition that the summated planned production volume value Yij(t) concerning an article i is equal to the required production volume Xi(t). Because the repetitive processings (step S106 to step S118) resulting from a change in the summated work force Zj3k(t) are included in the processings from step S104 to step S122, the repetitive processings resulting from a change in the summated work force Zj3k(t) are performed repeatedly every time the planned production volume value Yij(t) is changed.

If the repeated processings resulting from a change in the planned production volume value Yij(t) have thus been completed, a minimum one of the evaluating values stored in the hard disk system 64 is selected, and the values that have been set in calculating the evaluating value, i.e., the planned production volume value Yij(t), the overtime Zj 1(t), the holiday service duty Zj2(t), the work force Zj3(t) and the tact time Zj4(t) are set as article supply plan values (step S124), and the article supply plan values thus set are output to the CRT 54 and so on (step S126). The present routine is then terminated.

According to the article supply plan drafting device 20 of the first embodiment described above, an article supply plan, i.e., an article production plan with a minimum evaluating value, i.e., a minimum cost can be drafted. Moreover, since variables are changed at a predetermined interval and within a changeable range and are processed repeatedly, the plan can be drafted more quickly than in the case where the variables are changed per unit.

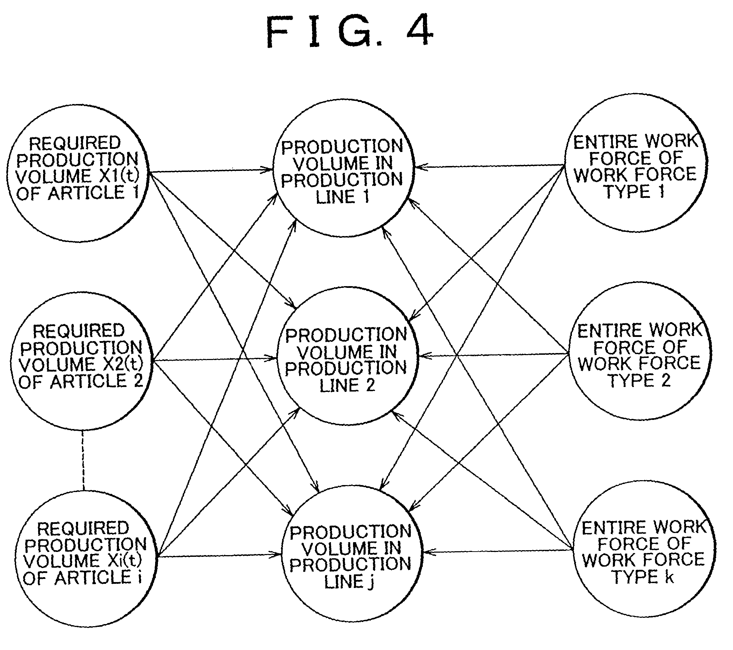

For convenience of explanation, the article supply plan drafting device 20 of the first embodiment has been applied to the case of drafting a supply plan in which an article i is supplied after being produced in a plurality of production lines j. However, the article supply plan drafting device 20 is also applicable to the case where a plurality of articles i are supplied after being produced in a plurality of production lines j. Fig. 4 is a conceptual view showing a case where a plurality of articles i are supplied after being produced in a plurality of production lines j.

Although the article supply plan drafting device 20 of the first embodiment drafts a supply plan based on the monthly unit t, it may draft a supply plan based on any period. For instance, the article supply plan drafting device 20 may draft a supply plan every week or every season.

Although the article supply plan drafting device 20 for drafting an article supply plan in which an article is supplied after being produced in a plurality of production lines has been described as the first embodiment of the invention, the invention may also be applied to a service supply plan drafting device for drafting a service supply plan in which services are offered from a plurality of service-offering stations. The services include article-based services such as repair of products and parts and article-free services such as personal assistance. In this case, the required production volume $X_i(t)$ may be replaced by a required service-offering volume of a service i in a plan-executing month t, and the planned production volume value $Y_{ij}(t)$ may be replaced by a planned service-offering value at each of the service-offering stations.

Further, any plan drafting method can be adopted as long as it is similar to the article supply plan drafting process routine exemplified in Fig. 3. Also, the article supply plan drafting device 20 may be a computer or a computer-readable program that functions as a variant of the computer. The article supply plan drafting device 20 may basically be a storage medium such as, e.g., a CD-ROM or a DVD-ROM in which such programs are stored. The program also may be transmitted over a communication network such as, e.g., the Internet. An aspect of the invention also includes a computer program product including instructions to perform the processing described herein. The computer program product includes, but is not limited to the above-mentioned memories storing the program, as well as, for example, a data signal embodied in a carrier wave or otherwise electronically transmitted.

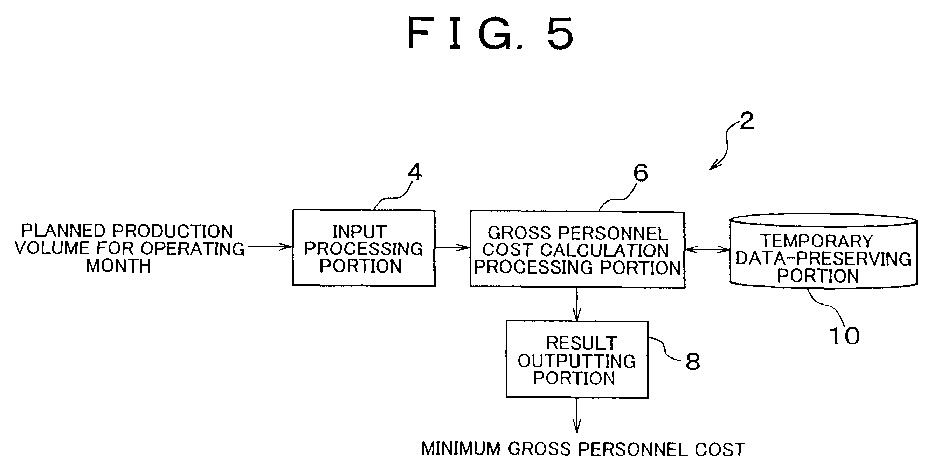

Fig. 5 is a block diagram showing a production plan drafting device for carrying out a production plan drafting method according to a second embodiment of the invention. Although a production plan for a vehicle is usually drafted every month, a production plan drafting device 2 of this embodiment calculates a planned production volume, a tact time, allocation of workers and a personnel cost in each production line in such a manner as to minimize a gross personnel cost in a production plan, especially in production plants. The production plan drafting device 2 has an input processing portion 4, a gross personnel cost calculation processing portion 6, a result outputting portion 8 and a temporary data-preserving portion 10.

In general, in a vehicle production plant, a planned production volume is allocated to each of a plurality of production lines. An operating time and the number of workers required for achievement of the planned production volume for each of the production lines are determined and a personnel cost is derived therefrom. By summating such personnel costs, a gross personnel cost in a corresponding month is calculated. The workers are grouped in categories with different hourly wages, i.e., regular employees, seasonal employees, part-timers and so on. Therefore, personnel costs cannot be calculated unless the number of workers distributed to each of the worker categories as well as the total number of workers is determined. Generally speaking, regular employees command higher hourly wages than part-timers. Thus, if the workers consist exclusively of part-timers in a certain production line, the personnel cost calculated for the production line can be reduced. On the other hand, however, this may cause the number of regular employees in the other production lines to increase. Therefore, the worker categories must be distributed suitably in each of the production lines.

A characteristic of the second embodiment is that a minimum gross personnel cost is sought while adjusting a planned production volume to be allocated to each of the production lines, a tact time, and a percentage chart of the worker categories (distribution of the number of workers required in a corresponding production line to each of the worker categories). Especially because the tact time has also been taken into account, a gross personnel cost can be calculated more precisely.

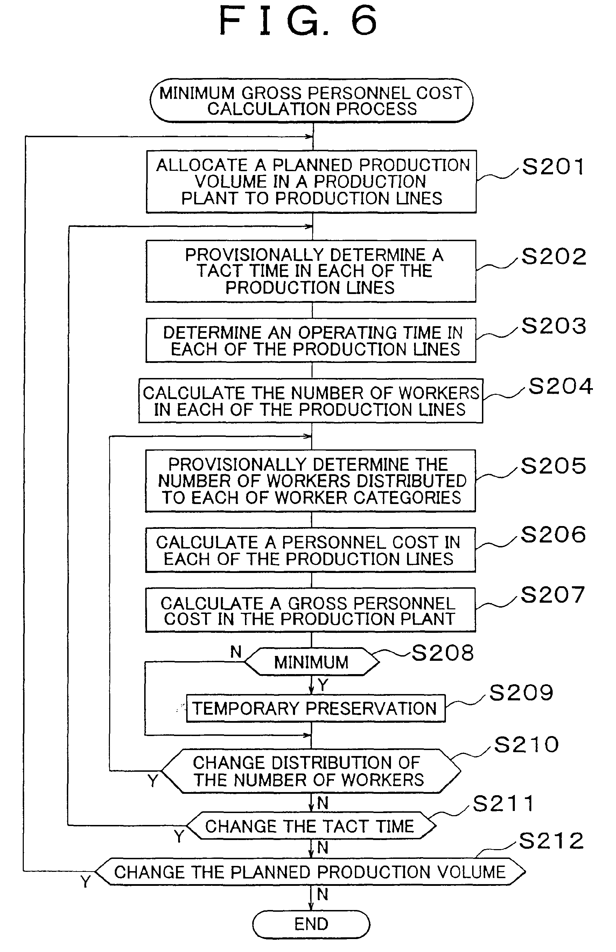

Next, a process of calculating a minimum gross personnel cost according to the second embodiment will be described with reference to a flowchart shown in Fig. 6. In this process, not only a minimum gross personnel cost, but also a personnel cost, an operating time, a tact time, the number of workers and the number of workers distributed to each of the worker categories in each of the production lines when the gross personnel cost is at its minimum can be obtained as results.

A planned production volume in the entire production plant in a plan-executing period, i.e., a certain month has been determined in advance. If the planned production volume has been input from the input processing portion 4, the gross personnel cost calculation processing portion 6 allocates the planned production volume to the production lines (step S201). A planned production volume in each of the production lines is determined provisionally by suitable allocation with reference to a scale, a specification and so on of the production line. After that, a later-described process performed by the gross personnel cost calculation processing portion 6 is performed in each of the production lines until a gross personnel cost is calculated.

Next, if a tact time in each of the production lines is determined provisionally (step S202), an operating time in each of the production lines corresponding to the provisionally determined planned production volume and tact time in each of the production lines for a corresponding month is obtained (step S203). The tact time is determined in accordance with the productivity of the production line. Hereinafter, a process of calculating an operating time will be described in detail.

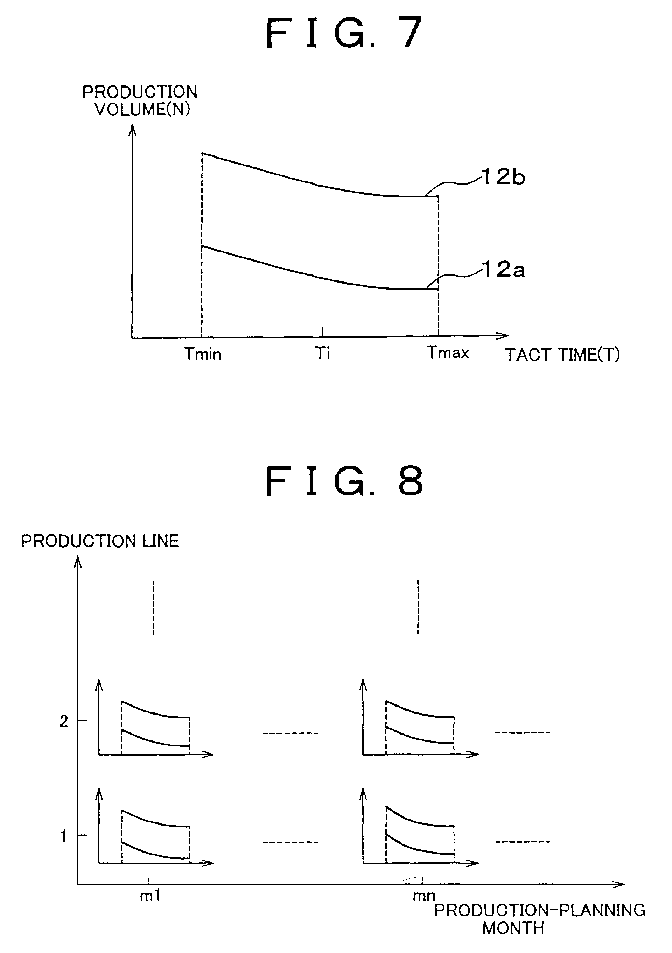

Fig. 7 is a graph showing a relation among tact time, planned production volume and operating time in each of the production lines. A line 12a in this graph represents a relation between tact time and production volume in the case where the production line is operated for a minimum operating time, i.e., for a regular operating time with no overtime service or holiday service. A line 12b represents a relation between tact time and production volume in the case where the production line is operated for a maximum operating time, i.e., for an operating time with maximum overtime service and holiday service. A tact time T can be set between a minimum tact time (Tmin) and a maximum tact time (Tmax). Therefore, a tact time, a planned production volume and an operating time can be set within an area surrounded by the lines 12a, 12b, the tact time Tmin and the tact time Tmax (hereinafter referred to as a solvable area). A planned production volume in each of the production lines has already been determined provisionally. Thus, if a suitable time Ti has been set, an operating time is calculated based on a graph shown in Fig. 8. Because the planned production volume has been determined provisionally in this embodiment, the operating time is reduced in proportion to a decrease in tact time. By calculating an operating time, it is possible to tell whether the regular operating time is sufficient or overtime service or holiday service is required.

If a planned production volume, a tact time and an operating time in each of the production lines have been determined through the above processings, the number of workers required for production of the planned production volume can be calculated (step S204). This is because the product of a quotient obtained by dividing the operating time by the tact time and the number of workers is constant. Then by distributing the calculated number of workers to each of the worker categories, the number of workers allocated to each worker category is determined provisionally (step S205). Because the number of persons in each of the worker categories in a corresponding month is constant, the number of workers distributed to each of the worker categories is determined with the constant number set as an upper limit. As described above, it is an ultimate object of this embodiment to minimize a gross personnel cost in the entire production plant. Thus, a substantial decrease in personnel cost in one of the production lines based on employment of a great number of part-timers does not make any sense. Provisional determination has to be made in consideration of the balance of distribution of the number of workers to the production lines. If the number of workers distributed to each of the worker categories has thus been determined, a personnel cost in each of the production lines can be calculated by multiplying the number of workers engaged in the production line by the operating time (step S206).

By summating the personnel costs for the production lines, a gross personnel cost in the entire production plant can be calculated (step S207). If the gross personnel cost calculated through the above processings is the lowest among previously calculated gross personnel costs, the gross personnel cost calculation processing portion 6 temporarily preserves the gross personnel cost, the personnel costs in the respective production lines, the tact time, the operating time, the number of workers, the number of workers distributed to each of the worker categories in the temporary data-preserving portion 10 (steps S208, S209).

In the above processings, a gross personnel cost is obtained by provisionally determining the number of workers distributed to each of the worker categories and calculating a personnel cost for each of the production lines. Thus, if the number of workers distributed to each of the worker categories has been changed, the calculated gross personnel cost may further be reduced. In this embodiment, the workers consist of regular employees, seasonal employees and part-timers. Therefore, a minimum gross personnel cost corresponding to the provisionally determined tact time and planned production volume can be obtained by repeatedly performing the above processings in step S205 to step S209 while suitably increasing or decreasing the number of workers allocated to each worker category (step S210).

In the above processings, a minimum gross personnel cost is calculated by determining a tact time Ti provisionally. However, if the provisionally determined tact time has been changed, the calculated gross personnel cost may be reduced further. Thus, a minimum gross personnel cost corresponding to the planned production volume that has been determined provisionally can be obtained by repeatedly performing the above processings in step S202 to S210 while suitably increasing or decreasing the tact time (step S211).

Furthermore, in the above processings, a minimum gross personnel cost is calculated by making a provisional determination by suitably distributing a planned production volume to each of the production lines. However, if the planned production volume that has been determined provisionally for each of the production lines has been changed, the calculated gross personnel cost may be reduced further. Thus, a minimum gross personnel cost can be obtained by repeatedly performing the above processings in step S202 to S210 while suitably changing the planned production volume distributed to each of the production lines (step S212).

As described above, a minimum gross personnel cost can be obtained finally through an attempt to calculate a gross personnel cost while suitably changing the number of workers distributed to each of the worker categories, the tact time and the planned production volume in each of the production lines. Also, it is possible to obtain a personnel cost in each of the production lines, an operating time, a tact time, the number of workers and the number of workers distributed to each of the worker categories when the gross personnel cost is at its minimum. The result outputting portion 8 outputs results of the foregoing processings.

The above description has been made on the premise that a planned production volume in the entire production plant in a plan-executing month has already been determined. For example, however, there may be a case where a planned production volume is determined quarterly although a plan is drafted monthly. This case requires not only adjusting distribution of a planned production volume among production lines in a certain month but also considering distribution of a planned production volume in a certain production line to respective months in a quarter. In this case, a processing of allocating a quarterly-set planned production volume to respective months and making a provisional determination is added to the flowchart shown in Fig. 6. Fig. 8 is a conceptual view showing a relation between production planning month and production lines. Each of small graphs in a large graph shown in Fig. 8 corresponds to Fig. 7 but indicates that each of the production lines has its own solvable area as shown in Fig. 7.

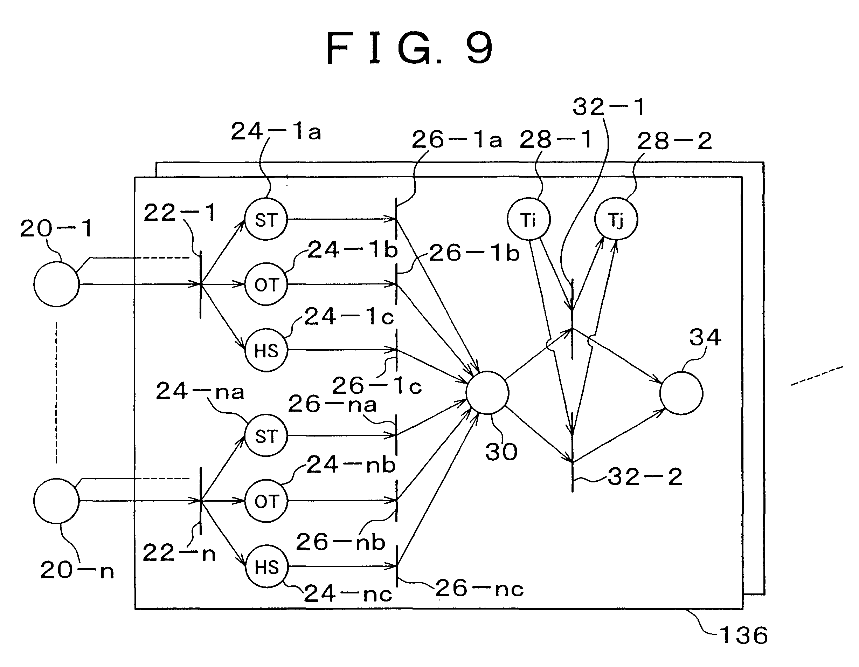

One of the features of this embodiment is that a model for deriving a relation among workers, tact time and so on and minimizing a gross personnel cost as described above has been made solvable by being expressed as a Petri net model, which is an object-oriented system analysis designing method. Fig. 9 shows a Petri net model for the production plan drafting method of this embodiment, especially for seeking a solution to a minimum gross personnel cost. Hereinafter, the Petri net model shown in Fig. 9 will be described.

Places 20-1 to 20-n indicate a group of workers belonging to an hourly wage (salary) class j (j=1, 2, ..., n). Transitions 22-1 to 22-n indicate employment of at least one worker out of the salary class j. Places 24-1a, 24-1b, 24-1c to 24-na, 24-nb and 24-nc indicate a state where n hired workers could be appointed to work on one of the following working conditions, i.e., standard time (ST), overtime service included (OT) and holiday service included (HS). Transitions 26-1a, 26-1b, 26-1c to 26-na, 26-nb and 26-nc indicate a state where they are appointed to work on each of the above working conditions. Places 28-1, 28-2 indicate states of a tact time Ti and a tact time Tj respectively in a corresponding production line. A place 30 indicates a personnel cost per unit time for workers working in a corresponding production line. A transition 32-1 indicates a case where workers are appointed to work only for a standard time with the tact time in a corresponding production line shifted from Ti to Tj. A transition 32-2 indicates a case where workers are appointed to work with maximum overtime service and holiday service. A place 34 indicates a solution space of a personnel cost to be minimized when the operating time, the tact time and the planned production volume in a corresponding production line have been changed. A sheet 136 with a portrayal of the Petri net model described above indicates a single production line.

The above Petri net model can be expressed according to a mathematical model as follows.

Target function min.

$$f = \sum_i \sum_j \sum_k n_{ij} c_{ik} \sigma_{ik} \quad ...(6)$$

Subject to

$$Ti \times \sum_j nij = \alpha_i \text{ (constant) } ...(7)$$

$$Ni = \sum_k \alpha_{ik} / T_i \quad ...(8)$$

$$\sum_i Ni = N \text{ (constant) } ...(9)$$

$$\sum_i n_{ij} = n_{oj} \text{ (constant) } ...(10)$$

The right side of an equation (6) represents a personnel cost. Therefore, minimization of the right side of the equation (6) leads to maximization of profits. Note that nij represents the number of workers of a salary class j working in a production line i, that cjk represents a personnel cost per worker of a salary class j working on a working condition k, and that σsik represents an operating time of a production line i under a working condition k. The equation (7) indicates that the product of the tact time Ti and the number of workers in a production line i is constant (αai). The equation (8) indicates that a production volume Ni in a production line i can be calculated by dividing the summated operating time by the tact time Ti. The equation (9) indicates that the summated production volume in the production lines i, i.e., the production volume in the entire production plant is constant (N). The equation (10) indicates that the number of workers in each of the worker categories is constant (noj).

According to the second embodiment as described above, a minimum gross personnel cost in a production plant can be calculated. It is also possible to tell how to set working conditions and working hours for workers with different salary standards such as regular employees and seasonal employees in order to minimize a personnel cost.

According to the second embodiment, a minimum gross personnel cost can finally be obtained by attempting to calculate a gross personnel cost while suitably changing the number of workers distributed to each of the worker categories, the tact time and the planned production volume in each of the production lines. Also, in the case of manufacturing vehicles, it is possible to determine the number of workers, the number of workers distributed to each of the worker categories, a tact time, an operating time and a personnel cost in each of the production lines when the gross personnel cost is at its minimum.

In the illustrated embodiment, a controller (the device 20) is implemented as a programmed general purpose computer. It will be appreciated by those skilled in the art that the controller can be implemented using a single special purpose integrated circuit (e.g., ASIC) having a main or central processor section for overall, system-level control, and separate sections dedicated to performing various different specific computations, functions and other processes under control of the central processor section. The controller can be a plurality of separate dedicated or programmable integrated or other electronic circuits or devices (e.g., hardwired electronic or logic circuits such as discrete element circuits, or programmable logic devices such as PLDs, PLAs, PALs or the like). The controller can be implemented using a suitably programmed general purpose computer, e.g., a microprocessor, microcontroller or other processor device (CPU or MPU), either alone or in conjunction with one or more peripheral (e.g., integrated circuit) data and signal processing devices. In general, any device or assembly of devices on which a finite state machine capable of implementing the procedures described herein can be used as the controller. A distributed processing architecture can be used for maximum data/signal processing capability and speed.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

**Claims**

1. A supply plan drafting device for drafting a supply plan of an article or a service in a plurality of supply stations capable of supplying the article or the service, **characterized by** comprising:

    data storing means (22) for storing unit supply man-hour data on work force and time required to supply the article or the service per unit and unit work-force-type-based cost data on cost per unit according to work force types;
    required supply volume inputting means (24) for inputting an entire required supply volume of the article or the service;
    supply volume distributing means (26) for distributing the input required supply volume to station supply volumes to be supplied from the supply stations based on a distribution parameter;
    work force setting means (28) for calculating a station supply man-hour required to supply the article or the service of the distributed station supply volume based on the unit supply man-hour data stored in the data storing means and setting a work-force-type-based work force for the calculated station supply man-hour based on a work force parameter;
    cost calculating means (32) for calculating a gross cost to supply the station supply volume from the supply stations based on the work-force-type-based work force set by the work force setting means and the unit work-force-type-based cost data stored in the data storing means;
    parameter changing means (30) for successively changing the distribution parameter and the work force parameter; and

plan setting means (34) for selecting a revised distribution parameter and a revised work force parameter corresponding to a minimum gross cost calculated by the cost calculating means using the work-force-type-based work force that is set by the work force setting means in response to changes in the distribution parameter and in the work force parameter by the parameter changing means and setting, as a supply plan, station supply volumes that are distributed by the supply volume distributing means using the revised distribution parameter and the revised work-force-type-based work forces for the supply stations.

2. The supply plan drafting device according to claim 1, **characterized in that** the parameter changing means (30) changes the distribution parameter within a suppliable range of the supply stations.

3. The supply plan drafting device according to claim 2, **characterized in:**

   **that** the suppliable range includes a regular suppliable range based on regular operation, and an irregular suppliable range based on irregular operation; and
   **that** the unit work-force-type-based cost data includes regular-operation unit work-force-type-based cost data on cost per unit according to work force types for regular operation, and irregular-operation unit work-force-type-based cost data on cost per unit according to work force types for irregular operation.

4. The supply plan drafting device according to claim 3, **characterized in:**

   **that** the irregular suppliable range includes an overtime suppliable range based on overtime service, and a holiday service suppliable range based on holiday service; and
   **that** the irregular operation unit work-force-type-based cost data includes overtime unit work-force-type-based cost data on cost per unit according to work force types for overtime service, and holiday service unit work-force-type-based cost data on cost per unit according to work force types for holiday service.

5. The supply plan drafting device according to any one of claims 1 to 4, **characterized in that** the parameter changing means (30) changes ratios of the work force types as a factor of the work force parameter.

6. The supply plan drafting device according to claim 5, **characterized in:**

   **that** the work force types include regular employees and a plurality of types of temporary employees; and
   **that** the parameter changing means (30) changes ratios of the work force types by changing percentages of the plurality of types of temporary employees.

7. The supply plan drafting device according to any one of claims 1 to 6, **characterized in that** the parameter changing means (30) changes the work force in each of the supply stations as a factor of the work force parameter.

8. The supply plan drafting device according to claim 7, **characterized in that** the parameter changing means (30) changes a gross work force in the supply stations within a work force changeable range of the supply stations.

9. The supply plan drafting device according to any one of claims 1 to 8, **characterized in that** the parameter changing means (30) successively changes each of the parameters at a predetermined interval set for each of the parameters.

10. The supply plan drafting device according to any one of claims 1 to 9, **characterized in:**

    **that** the supply stations are production lines for producing the article; and
    **that** the unit supply man-hour data are data on work force and time required to produce a single unit of the article.

11. The supply plan drafting device according to any one of claims 1 to 9, **characterized in:**

    **that** the supply stations are stations for offering a predetermined service; and
    **that** the unit supply man-hour data are data on work force and time required to offer a single unit of the predetermined service.

12. A supply plan drafting program including computer-readable instructions to make a computer function as the supply plan drafting device according to any one of claims 1 to 11.

**13.** A computer-implemented supply plan drafting method of drafting a supply plan of an article or a service in a plurality of supply stations capable of supplying the article or the service, **characterized by** comprising the steps of:

(a) distributing a required supply volume of the article or the service to station supply volumes to be supplied from the supply stations while successively changing a distribution parameter;

(b) calculating a station supply man-hour required to supply the article or the service of the distributed station supply volumes based on unit supply man-hour data on work force and time required to supply the article or the service per unit and setting a work-force-type-based work force for the calculated station supply man-hour while successively changing a work force parameter;

(c) calculating a gross cost to supply the station supply volumes to be supplied from the supply stations based on the set work-force-type-based work force and unit work-force-type-based cost data on work-force-type-based cost per unit; and

(d) selecting a revised distribution parameter and a revised work force parameter corresponding to a minimum of the gross cost calculated in response to changes in the distribution parameter and the work force parameter and setting as a supply plan station supply volumes that are distributed using the revised distribution parameter and the revised work-force-type-based work forces for the supply stations.

**14.** The supply plan drafting method according to claim 13, **characterized in that** the step (a) changes the distribution parameter within a suppliable range of the supply stations.

**15.** The supply plan drafting method according to claim 14, **characterized in:**

**that** the suppliable range includes a regular suppliable range based on regular operation, and an irregular suppliable range based on irregular operation; and

**that** the unit work-force-type-based cost data includes regular-operation unit work-force-type-based cost data on cost per unit according to work force types for regular operation, and irregular-operation unit work-force-type-based cost data on cost per unit according to work force types for irregular operation.

**16.** The supply plan drafting method according to claim 15, **characterized in:**

**that** the irregular suppliable range includes an overtime suppliable range based on overtime service, and a holiday service suppliable range based on holiday service; and

**that** the irregular operation unit work-force-type-based cost data includes overtime unit work-force-type-based cost data on cost per unit according to work force types for overtime service, and holiday service unit work-force-type-based cost data on cost per unit according to work force types for holiday service.

**17.** The supply plan drafting method according to any one of claims 13 to 16, **characterized in that** the step (a) successively changes the distribution parameter at a predetermined interval.

**18.** The supply plan drafting method according to any one of claims 13 to 17, **characterized in that** the step (b) changes ratios of the work force types as a factor of the work force parameter.

**19.** The supply plan drafting method according to claim 18, **characterized in:**

**that** the work force types include regular employees and a plurality of types of temporary employees; and

**that** the step (b) changes ratios of the work force types by changing percentages of the plurality of types of temporary employees.

**20.** The supply plan drafting method according to any one of claims 13 to 19, **characterized in that** the step (b) changes the work force in each of the supply stations as a factor of the work force parameter.

**21.** The supply plan drafting method according to claim 20, **characterized in that** the step (b) changes a gross work force in the supply stations within a work force changeable range of the supply stations.

**22.** The supply plan drafting method according to any one of claims 13 to 21, **characterized in that** the step (b) successively changes the work force parameter at a predetermined interval.

**23.** A computer-implemented production plan drafting method of drafting a production plan for producing an article in a plurality of production lines every plan-executing period including a plurality of operating days, **characterized by** comprising:

a production-line-based planned production volume provisionally determining step of allocating a planned production volume during the plan-executing period to the production lines;

an operating-time setting step of calculating an operating time in each of the production lines during the plan-executing period corresponding to a provisionally determined tact time in each of the production lines and the production-line-based planned production volume, based on a relation among tact time, planned production volume and operating time in each of the production lines;

a number-of-workers calculating step of calculating the number of workers required in each of the production lines based on the set operating time;

a production-line-based personnel cost calculating step of calculating a personnel cost in each of the production lines after distribution of the calculated number of workers to worker categories with different hourly wages; and

a gross personnel cost calculating step of calculating a gross personnel cost in all the production lines by summing personnel costs in the respective production lines, wherein

a minimum gross personnel cost is calculated while adjusting the number of workers distributed to the worker categories, the tact time, and the planned production volume allocated to each of the production lines.

**24.** The supply plan drafting method according to claim 23, **characterized in that** a gross personnel cost in all the production lines is calculated using a Petri net model.

# F I G. 1

20

24

36

DATA
INPUTTING
PORTION

PLAN
OUTPUTTING
PORTION

26

34

SUPPLY VOLUME
DISTRIBUTING
PORTION

PLAN SETTING
PORTION

30

28

32

PARAMETER
CHANGING
PORTION

WORK FORCE
SETTING
PORTION

COST
CALCULATING
PORTION

DATA STORING PORTION

22

ARTICLE-PRODUCTION DATA
WORK-FORCE-TYPE-BASED
COST DATA
PARAMETER-CHANGING DATA
DATA ON RESTRICTIVE
CONDITIONS

# F I G. 2

EP 1 217 563 A2

# F I G. 3

$$\boxed{\text{ARTICLE SUPPLY PLAN DRAFTING} \atop \text{PROCESS ROUTINE}}$$

| INPUT REQUIRED PRODUCTION VOLUME XI(T) | S100 |

| INITIALLY SET PLANNED PRODUCTION VOLUME VALUE YIJ(T) | S102 |

| SET SUMMATED WORK FORCE ZJ3K(T) | S104 |

| SET OVERTIME ZJ1(T) AND HOLIDAY SERVICE DUTY ZJ2(T) | S106 |

| SET WORK FORCE ZJ3K(T) | S108 |

| CALCULATE AND STORE EVALUATING VALUE | S110 |

| CHANGE WORK FORCE ZJ3K(T) AT INTERVAL Z3 | S112 |

S114 CHANGE COMPLETED? — NO

YES

| CHANGE SUMMATED WORK FORCE ZJ3K(T) | S116 |

S118 CHANGE COMPLETED? — NO

YES

| CHANGE PLANNED PRODUCTION VOLUME VALUE YIJ(T) AT INTERVAL ZY | S120 |

S122 CHANGE COMPLETED? — NO

YES

| SET A VALUE CORRESPONDING TO A MINIMUM EVALUATING VALUE AS AN ARTICLE SUPPLY PLAN VALUE | S124 |

| OUTPUT THE ARTICLE SUPPLY PLAN VALUE | S126 |

$$\boxed{\text{RET}}$$

# FIG. 4

# FIG. 5

PLANNED PRODUCTION VOLUME FOR OPERATING MONTH → INPUT PROCESSING PORTION (4) → GROSS PERSONNEL COST CALCULATION PROCESSING PORTION (6) ↔ TEMPORARY DATA-PRESERVING PORTION (10)

GROSS PERSONNEL COST CALCULATION PROCESSING PORTION → RESULT OUTPUTTING PORTION (8) → MINIMUM GROSS PERSONNEL COST

(2)

EP 1 217 563 A2

# F I G. 6

```
    ┌─────────────────────────────────┐
    │  MINIMUM GROSS PERSONNEL COST   │
    │      CALCULATION PROCESS        │
    └─────────────────────────────────┘
                    │
    ┌─────────────────────────────────┐
    │  ALLOCATE A PLANNED PRODUCTION  │── S201
    │     VOLUME IN A PRODUCTION      │
    │   PLANT TO PRODUCTION LINES     │
    └─────────────────────────────────┘
                    │
    ┌─────────────────────────────────┐
    │  PROVISIONALLY DETERMINE A      │── S202
    │    TACT TIME IN EACH OF THE     │
    │      PRODUCTION LINES           │
    └─────────────────────────────────┘
                    │
    ┌─────────────────────────────────┐
    │  DETERMINE AN OPERATING TIME IN │── S203
    │   EACH OF THE PRODUCTION LINES  │
    └─────────────────────────────────┘
                    │
    ┌─────────────────────────────────┐
    │ CALCULATE THE NUMBER OF WORKERS │── S204
    │   IN EACH OF THE PRODUCTION LINES│
    └─────────────────────────────────┘
                    │
    ┌─────────────────────────────────┐
    │   PROVISIONALLY DETERMINE THE   │── S205
    │  NUMBER OF WORKERS DISTRIBUTED  │
    │  TO EACH OF WORKER CATEGORIES   │
    └─────────────────────────────────┘
                    │
    ┌─────────────────────────────────┐
    │  CALCULATE A PERSONNEL COST IN  │── S206
    │   EACH OF THE PRODUCTION LINES  │
    └─────────────────────────────────┘
                    │
    ┌─────────────────────────────────┐
    │  CALCULATE A GROSS PERSONNEL    │── S207
    │   COST IN THE PRODUCTION PLANT  │
    └─────────────────────────────────┘
                    │
         N   ◇ MINIMUM ◇── S208
                    │ Y
    ┌─────────────────────────────────┐
    │   TEMPORARY PRESERVATION        │── S209
    └─────────────────────────────────┘
                    │
         ◇ CHANGE DISTRIBUTION OF ◇── S210
      Y  ◇ THE NUMBER OF WORKERS  ◇
                    │ N
         ◇ CHANGE THE TACT TIME ◇── S211
      Y             │ N
    ◇ CHANGE THE PLANNED PRODUCTION VOLUME ◇── S212
      Y             │ N
              ┌──────────┐
              │   END    │
              └──────────┘
```

# F I G. 7

# F I G. 8

# FIG. 9

EP 1 217 563 A2